# EUROPEAN PATENT APPLICATION

(11) **EP 2 916 532 A1**
(43) Date of publication of application: **09.09.2015**
(21) Application number: 14250035.4
(22) Date of filing: 05.03.2014
(51) Int. Cl.: H04M 11/06

(54) **Dynamic line management**

(71) Applicant: British Telecommunications public limited company, London EC1A 7AJ (GB)
(72) Inventor: The designation of the inventor has not yet been filed
(74) Representative: Lidbetter, Timothy Guy Edwin

(57) **Abstract**

A Dynamic Line Management system 5 incorporates a measure 52, 53 of the variability over time of values 70, 71 measured by a monitoring unit 6, together with their mean values 50, 51. The variability measure may be for example the standard deviation, or a particular percentile or inter-percentile range. Variation in measurements of such parameters, indicative of intermittent faults whose significance may be obscured or exaggerated by a simple mean value, can be used to raise an alert to a monitoring system and either stop the dynamic line management system acting, or switch the operating parameters of the line to a safe profile.

## Description

This invention relates to the management of digital subscriber loop (DSL) telecommunications connections, and in particular the maintenance of reliable and predictable quality of service on such lines. A digital subscriber loop connection is a connection between the premises of an end-user and an exchange, configured to be used for digital communications. Such connections may consist in whole or in part of a traditional wired electrical connection (traditionally known as the "copper" network), which may also still carry an analogue telephone signal (plain old telephone system or "POTS") but in modern systems part of the connection may be by other means such as optical fibre between the exchange and some intermediate interface: systems variously known as fibre-to-the-home, fibre-to-the-kerb, fibre-to-the-cabinet, fibre-to-the-distribution-point, etc (FTTH, FTTC, FTTK, FTTDP).

Modern digital communications systems can be used for a variety of different services, and many of these have different criteria for quality of service. For example, for a real-time service such as gaming or two-way voice applications latency is more important than error rate, but for other applications accuracy is more important than speed. In the traditional local loop a dedicated line was provided between the exchange and each user termination, available at all times for the exclusive use of that network termination. However, there was no provision for more capacity to be made available to an individual user, neither was there any provision to make the capacity available to other users when the dedicated user was not using.

Modern systems also include a degree of resource sharing between the exchange and an intermediate distribution point. Dynamic Line management (DLM) systems have been developed which monitor the performance of each connection and adjust the configuration parameters of individual lines to ensure they operate in a stable manner. Examples of such systems are described in the applicant's European patent specifications EP2122910, EP2342902, and EP2415208.

The data on which such systems operate is collected from each DSL line (via an element manager) and processed by the DLM system to generate a number of performance metrics such as the "mean time between errors" (MTBE) or "mean time between retrains" (MTBR) which gives a single view of performance over a period, typically of 24 hours. These parameters then form the input to the DLM logic engine which determines if the DSL line is currently operating within the set stability thresholds, and changes the line profile to a more appropriate one if necessary. Depending on line conditions this could be a faster or slower profile, or application of different error correction schemes (i.e. interleaving or retransmission).

Management of requirements on DSL lines has evolved considerably from the point the early DLM parameters were defined. In the era of "best efforts" performance and "top speed", it was sufficient to monitor simple averages such as "mean time between errors / retrains" in order to drive DLM systems. In some implementations DLM considers variation in downstream rate by looking at maximum and minimum line rates. In relation to monitoring minimum rate, the rate cap is used to limit the rate fluctuations. The minimum rate is used to avoid infrequent randomly low-rate train-ups.

However, with a wider variety of services now being delivered, and in particular real time and streaming services such as video era, any period of poor performance will be recognised by the user as a fault. Any underlying variation, whether a regular fluctuation of performance over the day or individual spikes of poor performance can be missed, as they would tend to be smoothed out by averaging, and thus not recognised or taken into account by conventional dynamic line management systems. The present invention provides a dynamic line management system driven by inputs derived from a new performance metric.

According to the invention there is provided a method of managing the performance of a communications system, comprising the steps of taking measurements of parameters indicative of system performance over a predetermined period, generating operating parameters based on the measured performance, and operating the system according to the generated operating parameters, wherein the measure of performance from which the operating parameters are derived is based on the variability of the measure over time.

The metric may be based on standard deviation, such that when the Dynamic Line Management system generates the operating parameters from daily performance statistics, it calculates the mean of each parameter (errors, retains, line rate etc), and also the standard deviation of each parameter. The Dynamic Line management system can then set the operating parameters such that, under the same conditions, the standard deviation of that parameter would not have exceeded a predetermined threshold value. If the line is outside of the given threshold, an action will be taken, i.e. for high rate variation - apply capping, for large error variation - apply retransmission. Large margin variation and forward error correction (FEC) variation are acceptable, as DLM changes will manifest in this variation. This will remove periods of the day of extreme behaviour and results in a more consistent and stable line.

The system can also be used to monitor static parameters, such as line length or impedance. Variation in measurements of such parameters, indicative of faults, can be used to raise an alert to a monitoring system and either stop DLM acting, or switch the operating parameters of the line to a safe profile.

In some cases, for example where the distribution is skewed, or the operator is more interested in distribution on one side of the mean rather than the other, variability measures other than standard deviation may be more appropriate, for example a specified percentile such as the 90^{th} (ninth decile), or the range between two specified percentiles such as the 25^{th} and 75^{th} (interquartile range).

The variability may be used in conjunction with a more conventional measure such as mean performance over the same time period to derive suitable operating parameters. For example, a line with consistently poor performance may generate a high mean value but a low variability, whereas a line which is generally good but suffers a daily "spike" will have a high variability but a low mean. The relative significance of the two measures will depend on the usage pattern of the user, for example if a customer only makes use of the line at the a particular time of day which coincides with the daily spike in poor quality, the mean value is of little relevance, but if the usage is more continuous the variability may be of less relevance that the average.

An embodiment of the invention will now be described, by way of example and with reference to the drawings, in which:
Figure 1 depicts a simplified network
Figure 2 is an illustration of different line characteristics
Figure 3 depicts a dynamic line management processor configured to operate according to the invention
Figure 4 is a flow chart illustrating a process according to the invention

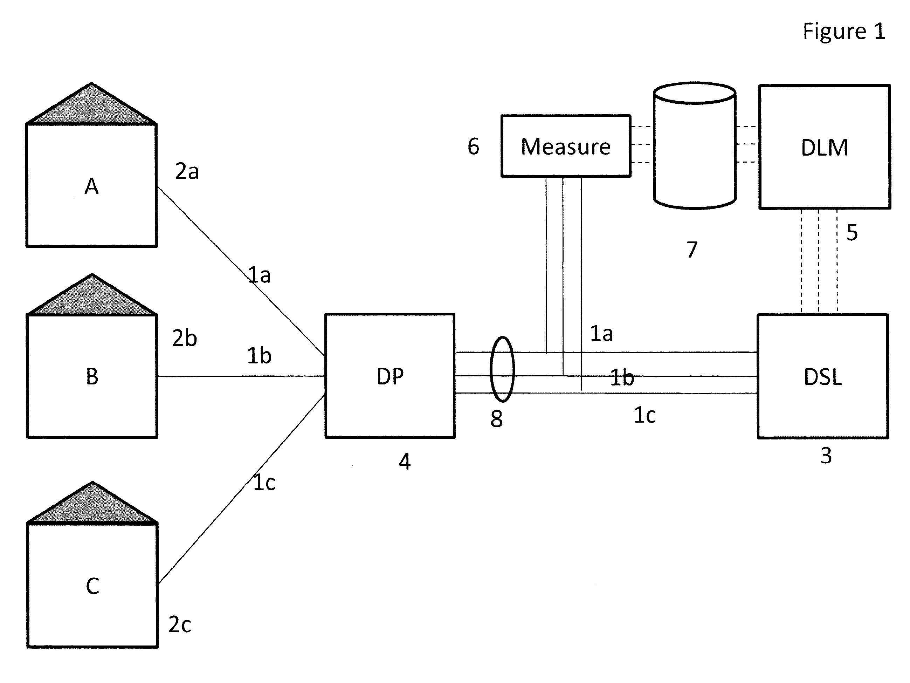

Figure 1 illustrates a simple distribution network, having digital subscriber lines (DSL) 1a, 1b, 1 c connecting individual premises 2a, 2b, 2c to an exchange 3 through a common distribution point 4. The management of each connection 1 a, 1 b, 1 c is controlled by a digital line management system (DLM) 5 using data collected by a monitoring system 6 and stored for averaging purposes in a register 7

The invention is concerned with the handling by the DLM system 5 of the input metrics measured by the monitoring point 6 and store in the register 7. It will be understood that some resources, notably the connection 8 between the exchange 3 and distribution point 4, have to be allocated between the lines 1a, 1b, 1 c multiplexed on the shared resource. Because of different line qualities, different services required by the users, or other factors, this may require the DLM system 5 to allocate different resources (e.g bandwidth, error checking etc)

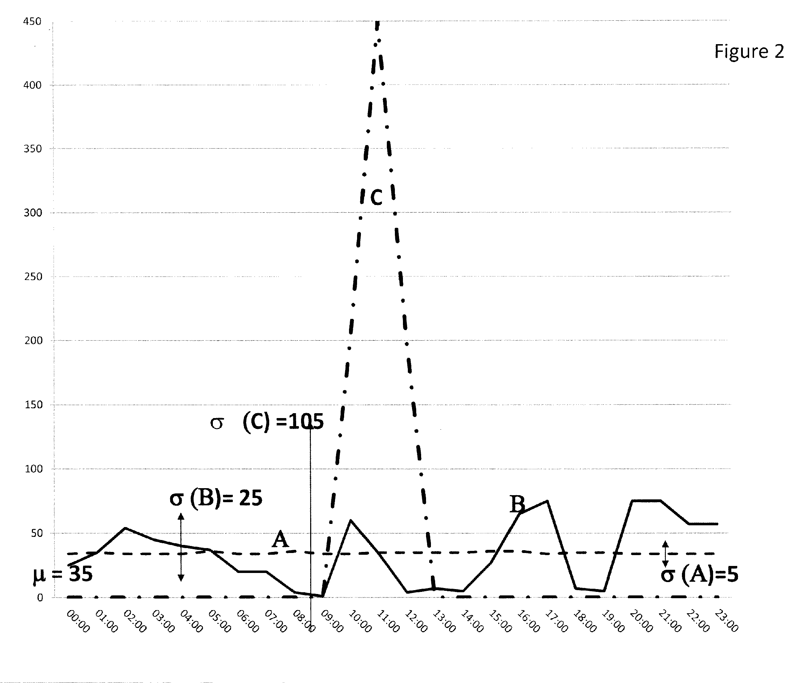

DSL line performance is very diverse, and depending on temporal variations the error performance can manifest in different ways. Figure 2 shows the performance of three lines each with the same "24h mean error rate" (µ) of 35 errors per hour), but very different customer experiences.

Line A (dashed trace) is the homogenous case, with the error rate stable throughout the day. The error rate of 35 is an accurate proxy of the customer experience though the day.

Line B (solid trace) has some variation in performance, but the upper and lower bounds are within a reasonable range around the mean (between zero and double the mean value of 35). In this case, the metric is weaker than line A, but DLM is likely to pick the right response.

Line C (chain-dotted trace) is the extreme example, where the line is perfect most of the day, and suffers extremely bad performance in three time slots (10:00, 11:00, 12:00). Given the error rate in these time slots is an order of magnitude larger than the average, DLM is likely to underreact, leaving the line unstable for longer. Also, depending on where the threshold for DLM action is set, this line may never get better as the daily mean could be below threshold despite the three individual timeslots massively exceeding the thresholds.

The significance of these spikes in the error rate may be even greater, as the errors may be caused by user activity on the line. If this is the case, the user's perception of the line quality may be even lower, as the line is only error-free when it is not being used. The applicant's earlier application EP14250009.9 filed on January 23rd 2014 addresses the issue of the relevance of errors during periods of inactivity.

This underlying variation can be measured by the standard deviation in the error rate. As indicated for lines A, B and C by error bars and the symbol σ, the standard deviation for Line A is very small, indicating that the instantaneous value is never far from the mean, whereas for Line C the standard deviation of 105 is three times the mean, indicating that the average value is rarely, or never, representative of the instantaneous value of the dataset, and therefore should not be relied on as being typical.

The use of Mean Time Between errors / retrain is still an important metric as it normalises the number of events to the amount of time the line was in service. Therefore the error rates in each time slot are still calculated via (sum of uptime in each period) / (sum of events in each period)

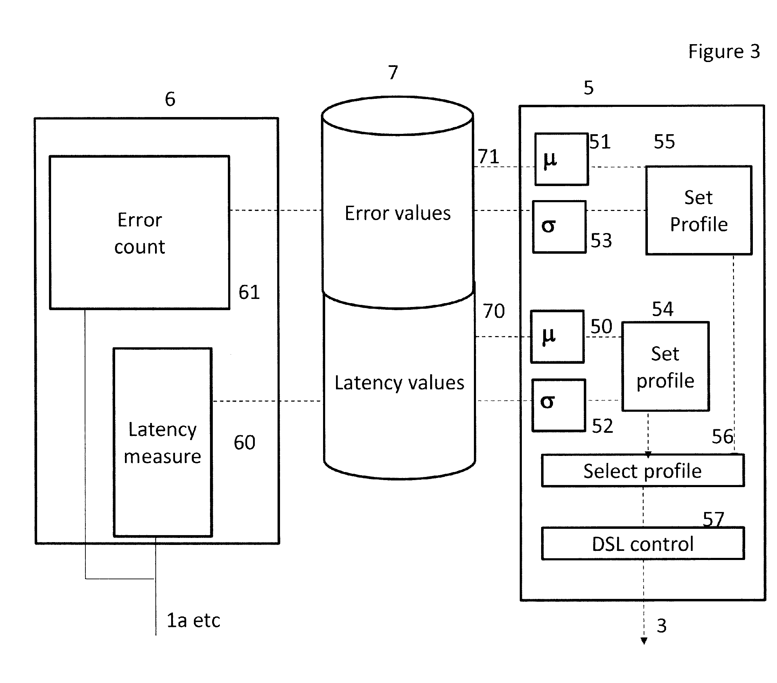

According to the invention, and as depicted in Figure 3, the metric set used by the Dynamic Line Management system 5 incorporates the standard deviation σ of the values measured by the monitoring unit 6. In this embodiment this is achieved by adding a StdDev(x) parameter to the conventional mean time between x (µ) parameter MTBx, with a weighting value suitably selected. Alternatively, the conventional MTBx parameter may be entirely replaced by the standard deviation (This is in fact a special case of the first, with MTBx given a weighting of zero). In the embodiment, a non-zero MTBx weighting is used. It will be appreciated that other performance metrics may be used, such as mean.

As shown In Figure 3, the monitor 6 has a number of measuring systems 60, 61 which extract quality parameters from the line 1 a being monitored. These may be detected passively, for example by monitoring the number of error messages reported by one or other end of the line 1a, or an active test may be carried out, for example by transmitting a signal and awaiting a response to determine latency. Other parameters may also be measured. For example, the system can be used to monitor static parameters, such as line length or impedance. Variation in measurements of such parameters, indicative of faults, can be used to raise an alert to a monitoring system and either stop DLM acting, or switch the operating parameters of the line to a safe profile.

These measures are processed collected, for example in sub periods of fifteen minutes, and the value for each sub-period is stored (70, 71) for use by the dynamic line management system 5. The dynamic line management system 5 periodically extracts the data (70, 71) stored in the previous reporting period and determines the average and standard deviation for each property measured (50, 51, 52, 53) and selects a profile (54, 55) of the facilities to be afforded to each line 1a etc, in order to meet predetermined quality standards. Each individual property (e.g latency, error rate) may generate a different optimum profile 54, 55, so an arbitrator 56 is used to determine which profile should be selected, and this profile is used to control (57) the operation of the DS connection 1a, in order to seek to maintain the following conditions for each measured property:
- MTBx(red) <= MTBx measured) <= MTBx(green)
- StdDev (red) <= StdDev (measured) <= StdDev (green)

Where the "red" and "green" threshold values are selected in accordance with the services being used. The "red" threshold indicates an unacceptably low QoS (quality of service) measure. The "green" threshold indicates a maximum QoS value, above which the use of additional bandwidth would provide little or no improvement in the perceived service to the end user. In other words, bandwidth can be released from the line without detriment to line quality. Only when both criteria are satisfied is a line deemed to have been stabilised.

In an alternative method, the actual average performance of the line is neglected and only the StdDev parameter is used.

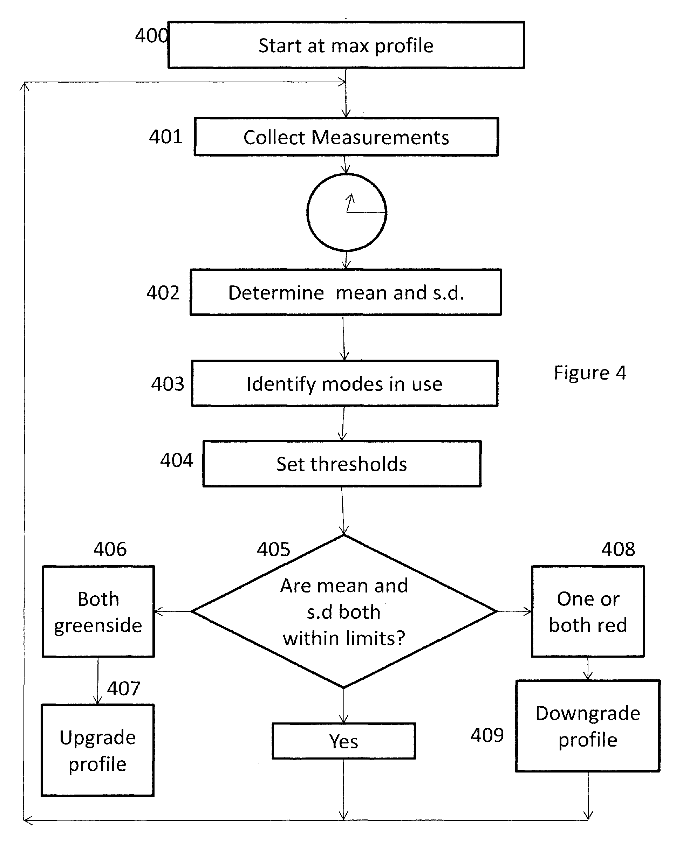

The flow diagram in Figure 4 depicts the process in more detail. The DLM processor 5 initially starts the line in the most aggressive profile (most error checking etc) (400) and moves to more conservative profiles over time. Consequently, this performance should start in the "green" over-protection range and should converge on a suitable profile over time.

Periodically, the monitoring point 6 measures various properties such as error rate and latency (step 401), stores the values 70, 71. Periodically the DLM system 5 calculates the mean (50, 51) and standard deviation (52, 53) values from the values recorded in the store 7 (step 402). The system may also identify what services are operating over the line (step 403) and adjust the threshold limit values within which the line is required to operate accordingly (step 404). For example voice applications require lower latency values than can be tolerated by one-way downloads, but can tolerate higher error rates.

The DLM system 5 then considers the variation in errors and retrains the system as follows. If both mean and standard deviation are within limits (step 405) no action is taken and the system awaits the next update. If both values are above the maximum threshold ("greenside"), this identifies that acceptable service can be used with less bandwidth and the profile is modified accordingly (step 407). Conversely, if either mean or standard deviation is below the minimum threshold ("redside") the profile is modified (step 409) for example by adding more forward error checking (FEC). The frequency at which the retraining is done may also vary over time depending on how stable the system has become.

When there are large values of standard deviation for errors the following responses can be considered: If in fast mode, apply a profile with an Impulse Noise Protection (INP) corresponding to the stddev i.e.

| | | | | |
|---|---|---|---|---|
| Std Dev | <10 | <50 | <100 | >=100 |
| INP | 1 | 4 | 8 | 16 |

Alternatively, a rule may be developed to select between the use of interleaving or physical layer retransmission. Interleaving is more able to fix a steady flow of errors using forward error correction, but retransmission is far better at dealing with large bursts. A large stddev should trigger the use of retransmission.

If a retrain process is required, the level of stddev could be used to determine the level of capping that should be applied in a given step i.e

| | | | | |
|---|---|---|---|---|
| Std Dev | <2 | <5 | <10 | >=10 |
| INP | 1 | 2 | 3 | 4 |

This would reduce the number of days required for DLM to converge on lines with very bad times of performance at a given time of day. It is also possible to look at the standard deviation of downstream / upstream margin to understand if it is safe to uncap a line. If there is still a large value of stddev in margin, then the profile cap is proving effective and should not be removed.

## Claims

1. A method of managing the performance of a communications system, comprising the steps of taking measurements of parameters indicative of system performance over a predetermined period, generating operating parameters based on the measured performance, and operating the system according to the generated operating parameters, wherein the measure of performance from which the operating parameters are derived is based on the variability of the measure over time.

2. A method according to claim 1, wherein the variability metric is based on standard deviation.

3. A method according to claim 1, wherein the variability metric is based on one or more predetermined percentiles of the measured parameters

4. A method according to claim 1, claim 2 or Claim 3, wherein a Dynamic Line Management system generates operating parameters for a communications line from performance statistics, by calculating the variability and mean of one or more parameters.

5. A method according to claim 1, claim 2, claim 3 or claim 4, wherein the parameters include errors

6. A method according to claim 1, claim 2 claim 3 claim 4 or claim 5, wherein the parameters include, retrains

7. A method according to claim 1, claim 2 claim 3, claim 4 claim 5 or claim 6, wherein the parameters include line rate

8. A method according to claim 1, claim 2 claim 3, claim 4, claim 5 claim 6 or claim 7, wherein the parameters include static parameters.

9. A method according to claim 1, claim 2 claim 3, claim 4, claim 5 claim 6 claim 7 or claim 8, wherein the measure of performance from which the operating parameters are derived is based on both the variability and the mean of each parameter.

10. A method according to claim 1, claim 2, claim 3, claim 4, claim 5 claim 6, claim 7, claim 8 or claim 9 where the sensitivity to variability is configurable according to the service being provided

11. A method according to claim 1, claim 2, claim 3, claim 4, claim 5 claim 6, claim 7, claim 8, claim 9 or claim 10 where the operating parameters and variability measures are weighted towards active customer periods
